# EUROPEAN PATENT APPLICATION

(11) **EP 4 343 573 A1**
(43) Date of publication of application: **27.03.2024**
(21) Application number: 23185916.6
(22) Date of filing: 17.07.2023
(51) Int. Cl.: G06F 16/2458

(54) **METHODS AND SYSTEMS FOR MATCHING MATERIAL NAMES**

(30) Priority: 20.09.2022 US 202217948488
(71) Applicant: The Boeing Company, Arlington, VA 22202 (US)
(72) Inventor: YANG, Li, Arlington, 22202 (US); KUPPER, Carolyn Lanier, Arlington, 22202 (US); THOMAS, Siji, Arlington, 22202 (US); HAGLER, George Matthew, Arlington, 22202 (US); THOMPSON, William Alan, Arlington, 22202 (US); ZOLLNER, Robin Lynn, Arlington, 22202 (US)
(74) Representative: St Clair Jones, Gregory Arthur Langley

(57) **Abstract**

A computer-implemented method for matching material names from one or more material sources with safety data sheet material names from one or more safety data sheets. The method includes: extracting the material names from the one or more material sources; preprocessing the material names and removing extraneous data from one or more of the material names; selecting one of the material names; comparing the selected material name with the safety data sheet material names; identifying the safety data sheet material names that match the material name; and transmitting an output to a user device to display the material name and the matching safety data sheet material names.

## Description

### TECHNOLOGICAL FIELD

The present disclosure relates generally to the field of matching material names and, more specifically, to identifying the processing material names to determine matches.

### BACKGROUND

A variety of governmental regulatory agencies develop and enforce environmental regulations. Examples of agencies include the U.S. Environmental Protection Agency (EPA), the Canadian EPA, and the European Union's European Chemicals Agency (ECHA). These regulations require parties to understand the chemical composition of products that are supplied in commerce. For a manufacturer of large products, such as an aircraft manufacturer, it is often difficult to trace the chemical compositions that are included in an aircraft. Further, when changes are made to existing regulations and/or new regulations are implemented, it can be difficult to ensure compliance. When government agencies introduce new chemical regulations, manufacturers ensure that their products are compliant. This includes identifying the regulated substances by manually querying multiple systems to check for the substance. However, these different systems often only provide a limited amount of data that is needed to determine compliance. For example, one system includes the production specifications, component supplier, supplier name for the component, and internal naming conventions. A second system includes the safety data sheets for a substance and that includes a unique supplier identification. The systems often use different naming conventions, and none of the systems offer a comprehensive view of a substances usage. The systems are not integrated to fully assess the regulations impact.

The inability to efficiently determine a substances usage may hinder a manufacturers timely compliance with the regulation. This could cause production stoppages, incur large fines from the agencies, and prevent the products from being sold into a market.

### SUMMARY

One aspect is directed to a computer-implemented method for matching material names from one or more material sources with safety data sheet material names from one or more safety data sheets. The method comprises: extracting, using processing circuitry, the material names from the one or more material sources; preprocessing, using the processing circuitry, the material names and removing extraneous data from one or more of the material names; selecting, using the processing circuitry, one of the material names; comparing, using the processing circuitry, the selected material name with the safety data sheet material names; identifying, using the processing circuitry, the safety data sheet material names that match the material name; and transmitting, using the processing circuitry, an output for display on a user device to display the material name and the matching safety data sheet material names.

In another aspect, the method further comprises determining, using the processing circuitry, a probability that the material name matches the safety data sheet material names.

In another aspect, the method further comprises listing the safety data sheet material names that match the material name in a ranked order based on the probability.

In another aspect, the method further comprises displaying the safety data material names that have a probability above a predetermined amount.

In another aspect, extracting the material names from the one or more material sources comprises analyzing the one more material sources for data in extensible markup language (XML) and parsing the xml data for the material names that are in tables.

In another aspect, extracting the material names from the one or more material sources comprises applying pattern matching to sections of text of the one or more material sources and identifying the material names.

In another aspect, preprocessing the material names comprises removing attributes from the material names including colors, types, and classes.

In another aspect, preprocessing the material names comprises applying tokenization and removing punctuation from the material names.

In another aspect, the method further comprises displaying a predetermined number of the safety data sheet material names that match the material name.

In another aspect, the method further comprises updating the data repository by linking a selected one of the matching safety data sheet material names with the material name.

One aspect is directed to a computing device comprising: processing circuitry; and memory circuitry storing a program which, when executed on the processing circuitry, performs an operation. The operation comprises: extracting material names from one or more material sources; comparing the material names with safety data sheet material names; identifying the safety data sheet material names that match the material name; calculating a probability that the matching safety data sheet material names match the material name; and generating a display comprising the material names and the matching safety data sheet material names and the corresponding probability.

In another aspect, the operation further comprises prior to identifying the matching material names, removing one or more of attributes and punctuation from the material names with the attributes comprising color, type, and class.

In another aspect, extracting the material names from the one or more material sources comprises identifying the one more material sources for tables that comprise extensible markup language (XML) and parsing the material names from the tables.

In another aspect, classifying the material names comprises: identifying a combination of words that are sequentially listed in the material name; determining if there is a match between the combination and the safety data sheet material names; when there is no match, dividing the combination into a smaller combination of the words that are sequentially listed in the material name; and determining if there is a match between the smaller combination and the safety data sheet material names.

In another aspect, extracting the material names from the one or more material sources comprises applying pattern matching to sections of text of the one or more material sources and identifying the material names.

In another aspect, the operation further comprises updating a data repository by linking a selected one of the matching safety data sheet material names with the material name.

One aspect is directed to a computer program product for matching material names from one or more material sources with safety data sheet material names from one or more safety data sheets. The computer program product comprises: a non-transitory computer-readable storage medium having a computer-readable program code embodied therewith with the computer-readable program code executable by processing circuitry to perform an operation that comprises: extracting the material names from the one or more material sources; preprocessing the material names and removing extraneous data from one or more of the material names; selecting one of the material names; comparing the selected material name with the safety data sheet material names; identifying the safety data sheet material names that match the material name; calculating a probability that the matching safety data sheet material name matches the material name; and generating an output for display on a user device that comprises the material name with the matching safety data sheet material names, and the probability that the safety data sheet material names match the material name.

In another aspect, classifying the material names comprises: identifying a combination of words that are sequentially listed in the material name; determining if there is a match between the combination and the safety data sheet material names; when there is no match, dividing the combination into a smaller combination of the words that are sequentially listed in the material name; and determining if there is a match between the smaller combination and the safety data sheet material names.

In another aspect, preprocessing the material names comprises removing attributes from the material names including colors, types, and classes prior to matching the material names with the safety data sheet material names.

In another aspect, preprocessing the material names comprises applying tokenization and removing punctuation from the material names prior to matching the material names with the safety data sheet material names.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a schematic diagram of a data repository that includes a database that stores information from one or more sources.
Figure 2 is a flowchart diagram of a method of matching material names to safety data sheet material names.
Figure 3 is a flowchart diagram of a method of identifying and extracting material names from documents.
Figure 4 is a flowchart diagram of a method of using classification of material names to determine a match.
Figure 5 is a diagram of a table displayed on a user device.
Figure 6 is a schematic diagram of a system for matching material names.
Figure 7 is a schematic diagram of a computing device.

### DETAILED DESCRIPTION

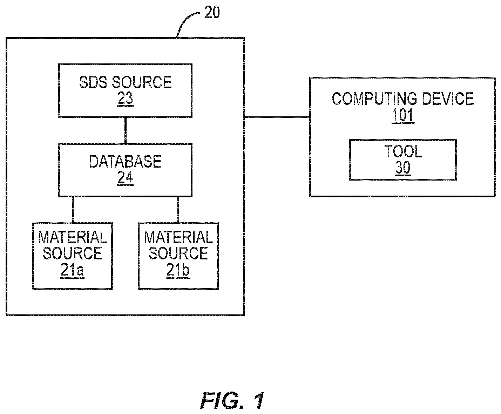

Figure 1 illustrates a data repository 20 that stored information about materials used by an entity. The data repository 20 includes a database 24 that includes information about the different materials that are used by the entity. The information can include a wide variety of information about the materials, including but not limited to the name of the materials, an identification number, the vendor or source that supplied the material, the chemical composition of the material, and the date the safety data sheet was written or revised. One context of use is for an aircraft manufacturer in which the database 24 includes the materials used for manufacturing an aircraft.

The database 24 is supplied with the information about the materials from a variety of different sources 21, 23. The material sources 21 includes internal information from different areas within a business, such as different departments including procurement, accounting, design, and manufacturing. The material sources 21 can also include different divisions within a larger overall business, such as different divisions or subsidiaries. The material sources 21 can also be different people within the business that gather the information about the material.

Another source of information about the material are safety data sheet sources 23. Safety data sheets are prepared by a supplier, vendor, or formulator and include detailed information about the material including the name, and physical and chemical properties of the material. Safety data sheets are usually obtained when the material is purchased or otherwise acquired.

The information about the materials from both the material sources 21 and safety data sheet source 23 are stored in digital files at the database 24. Figure 1 schematically illustrates an example in which two material sources 21a, 21b and one safety data sheet source 23 supply information to the database 24. This disclosure will describe the methodologies using this arrangement of Figure 1. It is understood that the disclosure is applicable to various numbers and arrangements of sources 21, 23 supplying information to the database 24.

An issue occurs when the material name is inconsistent between the material source 21 and the safety data sheet source 23. This can prevent an entity from accurately determining if a material is being used. One reason for the inconsistencies is the use of different naming conventions by the different material sources 21 and/or between the material sources 21 and the safety data sheet source 23. For example, a material source 21 can include a material name as "Carbon FE Solvent Azeotrope & Blends" while the same material is listed in a safety data sheet source 23 as "Carbon Fe". Another reason for the inconsistencies is caused by persons truncating or abbreviating the material name for simplicity or identifying the material name as an informal or slang version. Another example of an inconsistency is when the material name is changed by a supplier such as through rebranding, acquisitions/mergers, and splitting into separate entities.

The present application discloses a tool 30 that is a program used by a computing device 101 that compares the names of the materials from the different sources 21, 23 and provides an indication of a match. The matched entries are then stored in the database 24 to provide for a more effective search in the future for the material.

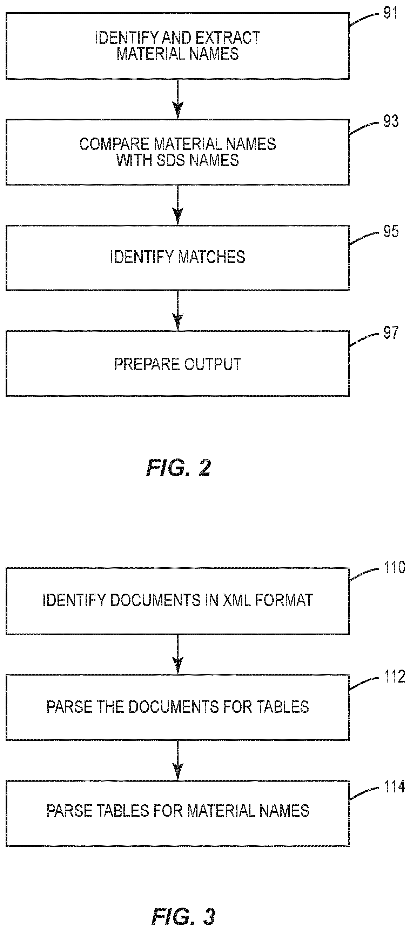

Figure 2 illustrates the functionality of the tool 30 in generating accurate and consistent information for the database 24. The tool 30 retrieves the documents from the one or more material sources 21 and identifies and extracts the material names from the documents (block 91). The names from the material source 21 are compared with the names from the safety data sheet source 23 (block 93). One or more matches are identified as possible equivalent materials (block 95). Matched safety data sheet material names are then prepared for outputting for a user device (block 97)

The functionality can also include one or more additional steps in different aspects of the tool 30. In one example, the material name is matched with the applicable safety data sheet name and the database 24 is updated. In one example, the material names are preprocessed prior to identifying matches.

The identification and extraction of material names from the documents (block 91) is difficult due to the nature of the documents from the material sources 21. One issue includes the material names being in different formats within the documents such as in tables, headers, and within text. Another issue is the documents having noise within the material name. Examples of noise include but are not limited to word type, class, grade, and color.

One method of identifying and extracting the material names is illustrated in Figure 3. The documents are analyzed to identify ones that include data in Extensible Markup Language (XML) format (block 110). The identified documents are then parsed for tables (block 112). The tables are then farther parsed for the material names (block 114). The tables can also be parsed for additional information, such as but not limited to supplier name and address, and classification. In a similar method, the documents are identified that include xml data within the text. The xml text is then parsed for the material names. In one example, machine learning sequence tagging that includes deep learning approaches and artificial intelligence methods are applied to identify the material names. Additionally or alternatively, rule-based methods such as pattern-matching are applied to the sections of xml sections to identify the material names.

Comparing and matching the identified material names from the material sources 21 (block 104) with those from the safety data sheet source 23 provides challenges due to the different naming conventions. Two examples of inconsistencies are included in Table 1 that include the manufacturing specifications from a material source 21 and the corresponding name from a safety data sheets source 23.

**Table 1**

| Mfg. Specification | Safety Data Sheet |
|---|---|
| Methane Retarder | 1234abc Methane Retarding Agent |
| Blue 543, 6709 abc 2.0 boc methane, atl-ubd-8907e, type ii | 987 gal-uivo green 543, 6709 methane |

As shown in the first example, a safety data sheet source 23 lists a material as "1234abc Methane Retarding Agent". The material source 21 identifies the same material as "Methane Retarder". The second example includes the safety data sheet source 23 using the name "987 gal-uivo green 543, 6709 methane " and the material source 21 using the name "Blue 543, 6709 abc 2.0 boc methane, atl-ubd-8907e, type ii".

To facilitate the comparison, the material names from the material sources 21 may be preprocessed. Preprocessing includes removing extraneous data in the material name that could prevent matching. The extraneous data can include one or more words or characters. Preprocessing can include one or more different steps. One step can include applying tokenization in which one or more types of punctuation are removed from the material name. In one example, hyphens are removed from the material name (e.g., "Freon-Agent" becomes "Freon Agent"). In another example, commas are removed from the material name. Preprocessing can also include removing attributes from the material name. Attributes can include but are not limited to a class of material, type of material, and color identifiers. One example includes processing the material name "987 gal-uivo green 543, 6709 methane" to "987 gal-uivo 543, 6709 methane" which includes the removal of a color descriptor from the material name.

In one example, preprocessing includes saving the material names in a common format. This facilitates comparing the different material names from the different sources 21, 23. In one example, the material names are saved in JavaScript Object Notion (JSON) format. The material names can be saved in various other formats including but not limited to JavaScript, YAML, and Protobuf.

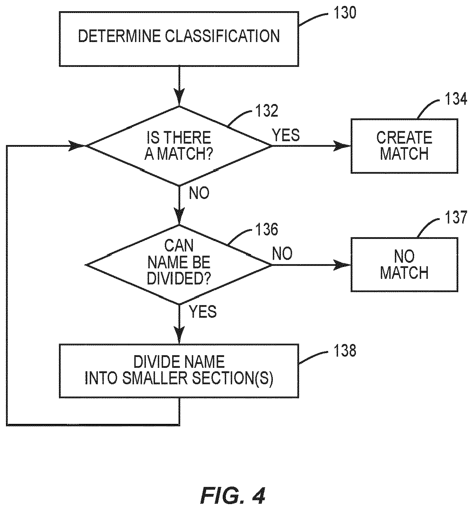

The material names either with or without preprocessing are matched with the names from the safety data sheet sources 23 (block 95). One manner of matching the names is using classifications for the material names. Figure 4 includes one example of using classification to determine whether there are matches. The classification for the material name is determined (block 130). In one example, classification includes determining the fundamental words in the material name that are sequentially together. The material names can be a uni-gram (one word), bi-gram (two word), tri-gram (three word), etc. Examples includes "Tetrachloroethylene" and "Freon" which are both uni-grams, "Methane Retarder" and "Deionized Water" which are both bi-grams, and "Chromium acrylic carbon" which is a tri-gram.

The method determines if there is a match for the highest classification of the material name (block 132). The highest classification match occurs when all the words in the classification match that from the safety data sheet material name. If there is a match with each of the words, the material names are matched together (block 134). If there is not a match, the method includes determining whether the material name can be divided into one or more smaller classifications (block 136). If there is no smaller classifications, the material name is not matched (block 137). If there is one or more smaller classifications, the lower classification is used to determine if there is a match (block 138). Using the material name from Figure 1, "Methane Retarder" is a higher classification bi-gram but does not match "1234abc Methane Retarding Agent". The material name is then divided from a bi-gram into two lower classification uni-grams that include "Methane" and "Retarder". This division provides for a match as the uni-gram "Methane" matches with one of the words in the safety data sheet material name "1234abc Methane Retarding Agent".

Another example includes the matching the material name "Carbon chloride, anhydrous". This highest classification tri-gram does not match a corresponding material name for just "calcium chloride". After failing to match as a tri-gram, the method divides the material name into the smaller classification bi-gram "carbon chloride". This bi-gram matches with the corresponding name from the safety data sheets.

Another classification system for matching the material names includes determining one or more root words from the material name. The root words from the material name can then be compared to determine if there is a match. For example, the material name from Table 1 "Blue 543, 6709 abc 2.0 boc methane, atl-ubd-8907e, type ii" includes the root word "methane" which is then used to match with other material names.

The order of the various matching steps may change. For example, Figure 4 include a method with the various identification steps in a particular order. The overall identification can include the steps in various different orders as the method is not limited to a particular sequence.

The process identifies the top matches. The process can also include calculating a probability that the material name matches the safety data sheet material name. This provides for determining an accuracy and/or confidence level that the names are correctly matched. The scoring for the probability can be based on one or more of the matching techniques. For example, scoring can be based on the classification level that is matched between the names. A tri-gram match can be scored highest, followed by a bi-gram score, and with a uni-gram score being the smallest. In another example, the scoring is based on a match of the material name as saved from the material source 21. A smaller score is assigned to a match of just a root portion of a material name. The identification of the top matches can be based on one or more multiple different matching techniques and scoring systems.

In one example, the tool 30 configured to perform the comparison between the material names includes a logistic regression model. The logistic regression model uses machine learning that has been trained using known matched and mis-matched pairs. In one example, the logistic regression model is trained using thirteen thousand (13,000) matched pairs of material names and five thousand (5,000) mis-matched pairs. During use, the probability of a match between the material names is calculated by the logistic regression model.

In one example using classification levels, the feature counts of longer and smaller combinations are input to the logistic regression model simultaneously for calculation and decision. The tri-grams and bi-grams are defined as longer combinations and the uni-grams are defined as shorter combinations.

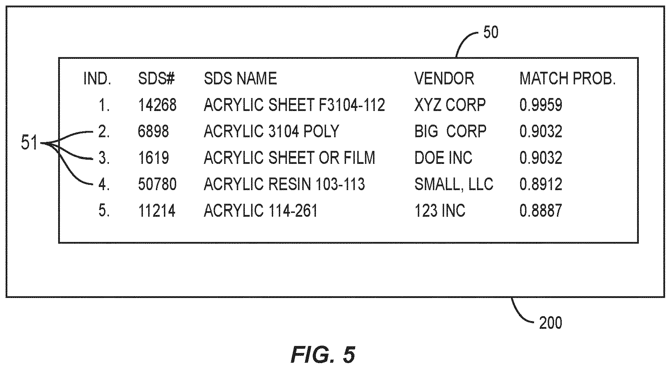

One example includes the material name "Acrylic F3104" from a material source 21. The names from the material safety data sheet source 23 are analyzed and the tool 30 outputs a table 50 as illustrated in Figure 5. The table 50 includes a list of output results 51 from the safety data sheet source 23 that most closely match the name from the material source 21. In addition to the material name, the output results 51 include data from the safety data sheet including a safety data sheet number, vendor, and the matching probability. The output results 51 are listed in descending order of matching probability. The number of output results 51 can vary.

The number of output results 51 included can vary. In one example, a predetermined number of output results 51 are configured for display. In another example, the output results 51 determined to have a probability level above a predetermined amount are configured for display.

The calculating and inclusion of the matching probability for each of the material names further facilitates the process. The matching probability can be used to determine a match. For example, if just a single material name is above a predetermined matching probability, then this is selected as the match. If the calculations determine multiple material names with high matching probabilities, the tool 30 may perform additional processing to differentiate these options. In one example, if there are no matches above a predetermined probability, the tool 30 can use this as a determination that there is not a matching safety data sheet for the material.

Because of the potentially large amount of data from the material sources 21 and/or safety data sheet source 23, the processing methods utilizes techniques to minimize the processing time.

In one example, a logistic Cuda kernel function is implemented and utilized by the computing device 101 to perform the comparison and/or calculate the matching probabilities for the material names. In one example, the ranking of the matches is performed using a Cuda Thrust sort function. Table 2 below provides test results in which 145,000 safety data sheet names were processed and compared to a material name to perform the ranking process.

**Table 2**

| Method | Prediction Time (seconds) | Ranking Time (Seconds) |
|---|---|---|
| Single threaded Python and sort | 0.062 | 12.71 |
| Cuda GPU Quadro K4200 | 0.000062 | 0.017 |

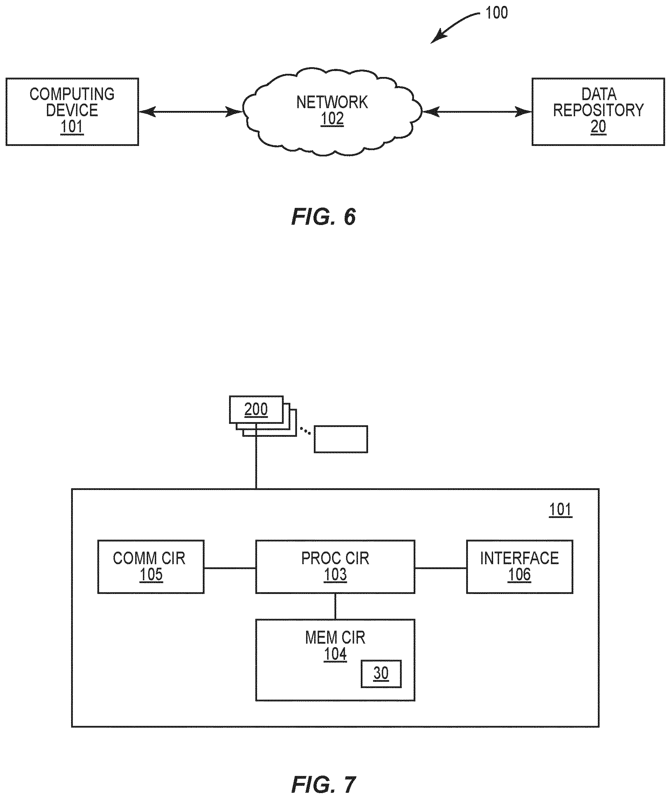

Figure 6 is a block diagram illustrating a system 100 for using the material tool 30. The computing device 101 is connected to a communication network 102. The communication network 102 can be any suitable communication network, including the Internet, a local access network, or a wide access network. The communication network 102 can be a wired or wireless network. The communication network 102 can use any suitable communication protocol, including any suitable wireless protocol. For example, the communication network 102 can use an Institute for Electrical and Electronics Engineers (IEEE) Wi-Fi standard, like an 802.11 standard, another Wi-Fi standard, a cellular protocol (including 3G, Long-Term Evolution (LTE), 4G and others), Bluetooth, and others. Further, the communication network 102 can use several different communication protocols.

The communication network 102 is further connected to the data repository 20. The data repository 20 can be any suitable data storage medium. For example, the data repository 20 can include a relational database, or any other suitable database. In one example, the data repository 20 includes network interface software and hardware to allow for communication with the communication network 102. In one example, the data repository 20 is a server computer with a network interface. As another example, the data repository 20 could be included within the computing device 101. Alternatively, the data repository 20 could be a cloud-based storage system, accessible via the communication network 102.

Figure 7 is a block diagram illustrating an example of the computing device 101. The computing device 101 includes processing circuitry 103, memory circuitry 104, and communications circuitry 105.

The processing circuitry 103 includes one or more circuits, microcontrollers, microprocessors, hardware, or a combination thereof. Memory circuitry 104 includes an (optionally non-transitory) computer readable storage medium storing program instructions, such as the tool 30 as a computer program product, that configures the processing circuitry 103 to implement one or more of the techniques discussed herein. Memory circuitry 104 can include various memory devices such as, for example, read-only memory, and flash memory. Memory circuitry 104 can be a separate component as illustrated in Figure 7 or can be incorporated with the processing circuitry 103. The communications circuitry 105 provides for communication with the data repository 20 and user devices 200. The communications circuitry 105 enables communication through the network 102, as well as through other methods outside of the network 102. The communications circuitry 105 can include one or more interfaces that provide for different methods of communication. The communications circuitry 105 can include a cellular interface that enables communication with a mobile communication network (e.g., a WCDMA, LTE, or WiMAX network). The communications circuitry 105 can include a WLAN interface configured to communicate with a local area network, e.g., via a wireless access point. An exemplary WLAN interface could operate according to the 802.11 family of standards, which is commonly known as a WiFi interface. The communications circuitry 14 105 can further include a personal area network interface, such as a Bluetooth interface. The communications circuitry 105 can also include a Near Field Communication interface that provides for short-range wireless connectivity technology that uses magnetic field induction to permit devices to share information with each other over short distances. The computing device 101 can include a user interface 106 that provides for a user to access and utilize the tool 30. The user interface 106 can include one or more input devices such as but not limited to a keypad, touchpad, roller ball, and joystick to enter commands to the processing circuitry 103. The user interface 106 can also include one or more displays for displaying information.

The processing circuitry 103 retrieves and executes the tool 30 that includes programming instructions stored in the memory circuitry 104 as well as stores and retrieves application data residing in the data repository 20. In another example, the data repository is part of, contained within, or otherwise configured with the computing device 101 such as part of the memory circuitry 104.

The memory circuitry 104 includes an operating system and a database management system (DBMS). The operating system generally controls the execution of the material tool 30. Examples of operating systems include, without limitation, versions of UNIX, distributions of the Linux^{®} operating system, versions of Microsoft^{®} Windows^{®} and so on. The DBMS generally facilitates the capture and analysis of data in the data repository 20 (e.g., material names). For instance, the DBMS could enable the definition, creation, querying, update and administration of the data repository 20. As an example, the DBMS could receive a query (e.g., composed using Structured Query Language (SQL)) and, in response, could generate an execution plan that includes one or more access routines to be run against the data repository 20. The DBMS could then execute the access routine(s) and could return any query result data to the requestor.

In one example, the methods are used to monitor materials used during the manufacturing of aircraft. However, the methods are also applicable to a variety of other industries and contexts and industries, including factories, manufacturing facilities, and other suitable industries.

Further, the disclosure comprises the following clauses:
Clause 1. A computer-implemented method for matching material names from one or more material sources with safety data sheet material names from one or more safety data sheet sources, the method comprising:
   extracting, using processing circuitry, the material names from the one or more material sources;
   preprocessing, using the processing circuitry, the material names and removing extraneous data from one or more of the material names;
   selecting, using the processing circuitry, one of the material names;
   comparing, using the processing circuitry, the material name that is selected with the safety data sheet material names;
      identifying, using the processing circuitry, the safety data sheet material names that match the material name; and
   transmitting, using processing circuitry, an output for display on a user device to display the material name and the matching safety data sheet material names.
Clause 2. The method of Clause 1, further comprising determining, using the processing circuitry, a probability that the material name matches the safety data sheet material names.
Clause 3. The method of Clause 2, further comprising listing the safety data sheet material names that match the material name in a ranked order based on the probability.
Clause 4. The method of Clause 2 or Clause 3, further comprising displaying the safety data material names that have a probability above a predetermined amount.
Clause 5. The method of any preceding Clause, wherein extracting the material names from the one or more material sources comprises analyzing the one or more material sources for data in extensible markup language (XML) and parsing the xml data for the material names that are in tables.
Clause 6. The method of any preceding Clause, wherein extracting the material names from the one or more material sources comprises applying pattern matching to sections of text of the one or more material sources and identifying the material names.
Clause 7. The method of any preceding Clause, wherein preprocessing the material names comprises removing attributes from the material names including colors, types, and classes.
Clause 8. The method of any preceding Clause, wherein preprocessing the material names comprises applying tokenization and removing punctuation from the material names.
Clause 9. The method of any preceding Clause, further comprising displaying a predetermined number of the safety data sheet material names that match the material name.
Clause 10. The method of any preceding Clause, further comprising updating the data repository by linking a selected one of the matching safety data sheet material names with the material name.
Clause 11. A computing device comprising:
   processing circuitry;
   memory circuitry storing a program which, when executed on the processing circuitry, performs an operation, the operation comprising:
      extracting material names from one or more material sources;
      comparing the material names with safety data sheet material names from one or more safety data sheet sources;
      identifying the safety data sheet material names that match the material name;
      calculating a probability that the matching safety data sheet material names match the material name; and
      generating a display comprising the material names and the matching safety data sheet material names and the corresponding probability.
Clause 12. The computing device of Clause 11, the operation further comprising prior to identifying the material names that match, removing one or more attributes and punctuation from the material names with the attributes comprising color, type, and class.
Clause 13. The computing device of Clause 11 or Clause 12, wherein extracting the material names from the one or more material sources comprises identifying the one or more material sources for tables that comprise extensible markup language (XML) and parsing the material names from the tables.
Clause 14. The computing device of any of Clauses 11 to 13, wherein the operation further comprises classifying the material names comprising:
   identifying a combination of words that are sequentially listed in the material name;
   determining if there is a match between the combination and the safety data sheet material names;
   when there is no match, dividing the combination into a smaller combination of the words that are sequentially listed in the material name; and
   determining if there is a match between the smaller combination and the safety data sheet material names.
Clause 15. The computing device of any of Clauses 11 to 14, wherein extracting the material names from the one or more material sources comprises applying pattern matching to sections of text of the one or more material sources and identifying the material names.
Clause 16. The method of any of Clauses 11 to 15, the operation further comprising updating a data repository by linking a selected one of the matching safety data sheet material names with the material name.
Clause 17. A computer program product for matching material names from one or more material sources with safety data sheet material names from one or more safety data sheets, the computer program product comprising:
   a non-transitory computer-readable storage medium having a computer-readable program code embodied therewith, the computer-readable program code executable by processing circuitry to perform an operation, the operation comprising:
   extracting the material names from the one or more material sources;
   preprocessing the material names and removing extraneous data from one or more of the material names;
      selecting one of the material names;
      comparing the material name that is selected with the safety data sheet material names;
   identifying the safety data sheet material names that match the material name;
   calculating a probability that the matching safety data sheet material name matches the material name; and
   generating an output for display on a user device that comprises the material name, the matching safety data sheet material names, and the probability that the safety data sheet material names match the material name.
Clause 18. The computing program product of Clause 17, wherein the operation further comprises classifying the material names comprising:
   identifying a combination of words that are sequentially listed in the material name;
   determining if there is a match between the combination and the safety data sheet material names;

   when there is no match, dividing the combination into a smaller combination of the words that are sequentially listed in the material name; and
   determining if there is a match between the smaller combination and the safety data sheet material names.
Clause 19. The computing program product of Clause 17 or Clause 18, wherein preprocessing the material names comprises removing attributes from the material names including colors, types, and classes prior to matching the material names with the safety data sheet material names.
Clause 20. The computing program product of any of Clauses 17 to 19, wherein preprocessing the material names comprises applying tokenization and removing punctuation from the material names prior to matching the material names with the safety data sheet material names.

The present invention may be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A computer-implemented method for matching material names from one or more material sources with safety data sheet material names from one or more safety data sheet sources, the method comprising:
extracting, using processing circuitry (103), the material names from the one or more material sources (21);
preprocessing, using the processing circuitry (103), the material names and removing extraneous data from one or more of the material names;
selecting, using the processing circuitry (103), one of the material names;
comparing, using the processing circuitry (103), the material name that is selected with the safety data sheet material names;
identifying, using the processing circuitry (103), the safety data sheet material names that match the material name; and
transmitting, using processing circuitry (103), an output for display on a user device (200) to display the material name and the matching safety data sheet material names.

2. The method of claim 1, further comprising determining, using the processing circuitry (103), a probability that the material name matches the safety data sheet material names.

3. The method of claim 2, further comprising listing the safety data sheet material names that match the material name in a ranked order based on the probability.

4. The method of claim 2 or claim 3, further comprising displaying the safety data material names that have a probability above a predetermined amount.

5. The method of any of claims 1 to 4, wherein extracting the material names from the one or more material sources (21) comprises analyzing the one or more material sources for data in extensible markup language (XML) and parsing the xml data for the material names that are in tables (50).

6. The method of any of claims 1 to 5, wherein extracting the material names from the one or more material sources (21) comprises applying pattern matching to sections of text of the one or more material sources (21) and identifying the material names.

7. The method of any of claims 1 to 6, wherein preprocessing the material names comprises removing attributes from the material names including colors, types, and classes, and/or, wherein preprocessing the material names comprises applying tokenization and removing punctuation from the material names.

8. The method of any of claims 1 to 8, further comprising displaying a predetermined number of the safety data sheet material names that match the material name, and/or, further comprising updating the data repository by linking a selected one of the matching safety data sheet material names with the material name.

9. A computing device comprising:
processing circuitry (103);
memory circuitry (104) storing a program which, when executed on the processing circuitry (103), performs an operation, the operation comprising:
extracting material names from one or more material sources (21);
comparing the material names with safety data sheet material names from one or more safety data sheet sources (23);
identifying the safety data sheet material names that match the material name;
calculating a probability that the matching safety data sheet material names match the material name; and
generating a display comprising the material names and the matching safety data sheet material names and the corresponding probability.

10. The computing device of claim 9, the operation further comprising prior to identifying the material names that match, removing one or more attributes and punctuation from the material names with the attributes comprising color, type, and class, and/or, wherein extracting the material names from the one or more material sources comprises identifying the one or more material sources for tables that comprise extensible markup language, XML, and parsing the material names from the tables.

11. The computing device of claim 9 or claim 10, wherein the operation further comprises classifying the material names comprising:
identifying a combination of words that are sequentially listed in the material name;
determining if there is a match between the combination and the safety data sheet material names;
when there is no match, dividing the combination into a smaller combination of the words that are sequentially listed in the material name; and
determining if there is a match between the smaller combination and the safety data sheet material names.

12. The computing device of any of claims 9 to 11, wherein extracting the material names from the one or more material sources (21) comprises applying pattern matching to sections of text of the one or more material sources (21) and identifying the material names, and/or, the operation further comprising updating a data repository by linking a selected one of the matching safety data sheet material names with the material name.

13. A computer program product for matching material names from one or more material sources with safety data sheet material names from one or more safety data sheets, the computer program product comprising:
a non-transitory computer-readable storage medium having a computer-readable program code embodied therewith, the computer-readable program code executable by processing circuitry (103) to perform an operation, the operation comprising:
extracting the material names from the one or more material sources (21);
preprocessing the material names and removing extraneous data from one or more of the material names;
selecting one of the material names;
comparing the material name that is selected with the safety data sheet material names;
identifying the safety data sheet material names that match the material name;
calculating a probability that the matching safety data sheet material name matches the material name; and
generating an output for display on a user device (200) that comprises the material name, the matching safety data sheet material names, and the probability that the safety data sheet material names match the material name.

14. The computing program product of claim 13, wherein the operation further comprises classifying the material names comprising:
identifying a combination of words that are sequentially listed in the material name;
determining if there is a match between the combination and the safety data sheet material names;
when there is no match, dividing the combination into a smaller combination of the words that are sequentially listed in the material name; and
determining if there is a match between the smaller combination and the safety data sheet material names.

15. The computing program product of claim 13 or claim 14, wherein preprocessing the material names comprises removing attributes from the material names including colors, types, and classes prior to matching the material names with the safety data sheet material names, and or, wherein preprocessing the material names comprises applying tokenization and removing punctuation from the material names prior to matching the material names with the safety data sheet material names.
